# DEMANDE DE BREVET EUROPEEN

(11) **EP 4 474 215 A1**
(43) Date de publication de la demande: **11.12.2024**
(21) Numéro de dépôt: 24305902.9
(22) Date de dépôt: 07.06.2024
(51) Int. Cl.: B60P 3/38, A47C 17/58, A47C 17/70, A47C 17/76, A47C 17/80, B62D 33/06, B61D 31/00

(54) **VEHICULE DE LOISIRS AVEC UN LIT TRANSVERSAL A SOMMIER EN DEUX PARTIES DONT UNE MOBILE**

(30) Priorité: 08.06.2023 FR 2305767
(71) Demandeur: Trigano VDL, 75019 Paris (FR)
(72) Inventeur: PRAT, Isabelle, 24530 CHAMPAGNAC DE BELAIR (FR)
(74) Mandataire: Novagraaf Technologies

(57) **Abrégé**

La présente invention a pour objet un véhicule de loisirs dont une partie intérieure habitable comporte une partie haute constituant un lit (16) qui comporte au moins un premier élément de sommier (20), qui est délimité par un bord transversal avant (30) et un bord transversal arrière (28) et qui est monté pivotant autour d'un axe transversal horizontal arrière (A1), situé au droit de son bord transversal arrière (28), entre une position horizontale avant de couchage et une position haute verticale de rangement ; et est monté coulissant horizontalement entre sa position horizontale avant de couchage et une position horizontale arrière de rangement qui est décalée longitudinalement vers l'arrière par rapport à cette position horizontale avant de couchage.

La zone qui est située en-dessous de l'élément de sommier avant (20) en position de couchage est aménagée avec deux zones fonctionnelles latérales (ZG) qui sont agencées en vis-à-vis dont une penderie et un bureau.

## Description

### Domaine technique de l'invention

L'invention concerne un véhicule de loisirs dont la partie arrière comporte une partie haute constituant un espace de couchage qui comporte au moins un élément plan de couchage tel qu'un premier élément de sommier qui est mobile entre une position horizontale de couchage et une position de rangement afin, en dehors des périodes d'utilisation pour dormir, de pouvoir accéder à une ou plusieurs zones fonctionnelles du véhicule.

### Arrière-plan technique

Un tel aménagement peut par exemple comporter un lit transversal arrière comportant un sommier en deux parties dont un premier élément de sommier mobile et un deuxième élément de sommier adjacent et coplanaire fixe permettant de disposer d'un couchage transversal double de grandes dimensions.

Grâce à la possibilité de déplacer l'élément mobile du sommier, il s'agit de donner accès à la zone au-dessous de laquelle élément mobile s'étend en position horizontale d'utilisation et/ou à des équipements et/ou des rangements situés dans cette zone.

Le véhicule de loisirs est par exemple un camping-car ou une caravane.

La partie fixe du plan de couchage s'étend par exemple au-dessus d'une soute arrière à bagages ou à vélos à l'intérieur de laquelle il est par exemple possible d'accéder depuis l'extérieur du véhicule, l'élément de sommier fixe étant alors agencé à l'extrémité arrière du véhicule et l'élément de sommier mobile étant agencé à l'avant par rapport à l'élément arrière fixe, avec ainsi une possibilité d'accéder à la zone de couchage « par l'avant » depuis l'intérieur du véhicule.

Il est aussi connu d'inverser longitudinalement un tel agencement, par exemple pour un fourgon ou un van, avec l'élément mobile du sommier agencé à l'extrémité arrière du véhicule, avec une possibilité d'accéder « par l'arrière » à la zone haute de couchage.

Des exemples d'aménagement sont connus des documents US3738699A et US10111529B2.

L'invention vise à proposer une conception d'un tel type d'aménagement qui présente la plus grande modularité et versatilité quant à la cinématique de rangement de l'élément de sommier mobile et quant aux accès ainsi offerts à différentes zones fonctionnelles d'utilisation agencées en-dessous de l'élément de sommier mobile.

### Résumé de l'invention

L'invention propose un véhicule de loisirs caractérisé en ce qu'il comporte une zone intérieure habitable qui comporte :
- une partie basse délimitée par un plancher ;
- et une partie haute constituant un espace de couchage qui comporte :
- un premier élément plan de couchage, notamment un premier élément de sommier, qui est délimité par un bord transversal avant et un bord transversal arrière et qui :
   -- est monté pivotant autour d'un axe transversal horizontal arrière, situé au droit de son bord transversal arrière, entre une position horizontale avant de couchage et une position haute verticale de rangement ;
   -- et est monté coulissant horizontalement entre sa position horizontale avant de couchage et une position horizontale arrière de rangement qui est décalée longitudinalement vers l'arrière par rapport à cette position horizontale avant de couchage.

Selon d'autres caractéristiques d'un tel véhicule de loisirs :
- la partie haute constitue un espace de couchage comportant un second élément plan de couchage, notamment un second élément fixe de couchage qui :
   -- lorsque le premier élément de couchage est dans sa position horizontale avant de couchage, prolonge ce dernier vers l'arrière pour constituer un plan de couchage à deux éléments plans de couchage adjacents ;
   -- et, lorsque le premier élément de couchage est dans sa position horizontale arrière de rangement, est situé au-dessus de ce dernier ;
- la position horizontale arrière de rangement du premier élément de couchage est décalée longitudinalement par rapport à la position horizontale avant de couchage de manière qu'il soit entièrement escamoté sous le second élément plan de couchage avec son bord transversal avant situé sensiblement au doit du bord transversal avant du second élément plan de couchage ou décalé vers l'arrière par rapport à celui- ci ;
- dans sa position horizontale avant de couchage, le premier élément plan de couchage, s'étend au-dessus d'au moins une première zone latérale fonctionnelle fermée par une première plaque horizontale et délimitée latéralement par une première face latérale, d'orientation verticale et longitudinale, d'accès à l'intérieur de la première zone latérale fonctionnelle et, dans la position haute verticale de rangement du premier élément plan de couchage, un utilisateur peut accéder à la première zone latérale fonctionnelle par la première face latérale d'accès ;
- la première plaque horizontale est montée pivotante autour d'un axe horizontal entre sa position horizontale de repos et une position relevée et, lorsque le premier élément plan de couchage est dans sa position horizontale arrière de rangement, un utilisateur peut relever la première plaque horizontale pour lui permettre d'accéder par le haut à la première zone latérale fonctionnelle ;
- la première zone fonctionnelle est une penderie comportant une tringle de penderie ;
- la tringle de penderie est monté mobile entre une position basse de rangement et une position haute déployée, et la tringle de penderie est liée en mouvement avec la première plaque horizontale pivotante, grâce à quoi la tringle de penderie est dans sa position basse de rangement lorsque la première plaque horizontale pivotante est dans sa position horizontale, et est dans sa position haute déployée ;
- l'axe de pivotement de la première plaque horizontale est d'orientation longitudinale, et la tringle de penderie est une barre horizontale parallèle à cet axe de pivotement ;
- il est prévu une porte de fermeture de la première face latérale d'accès à l'intérieur de la première zone latérale fonctionnelle ;
- dans sa position horizontale avant de couchage, le premier élément plan de couchage s'étend au-dessus d'au moins une deuxième zone latérale fonctionnelle fermée par une deuxième plaque horizontale et délimitée latéralement par une deuxième face, d'orientation verticale et longitudinale, d'accès à l'intérieur de la deuxième zone latérale fonctionnelle et, dans la position haute verticale de rangement du premier élément plan de couchage ou dans sa position horizontale arrière de rangement, un utilisateur peut accéder à la deuxième zone latérale fonctionnelle par la deuxième face latérale d'accès et à la face supérieure de la deuxième plaque horizontale ;
- la première plaque horizontale est un plan de travail, notamment d'un bureau, et la deuxième zone latérale fonctionnelle permet à un utilisateur assis devant le plan de travail de disposer ses jambes au moins en partie à l'intérieur de la deuxième zone latérale fonctionnelle, à travers la deuxième face latérale d'accès ;
- la première et la deuxième faces latérales d'accès sont agencées l'une face à l'autre et délimitent entre elles un espace d'accès à la première et à la deuxième zones fonctionnelles qui est délimité verticalement vers le bas par une portion du plancher et qui, lorsque le premier élément plan de couchage est dans sa position horizontale, est délimité vers le haut par une portion du premier élément plan de couchage.

### Brève descriptions des figures

D'autres caractéristiques et avantages de l'invention apparaitront au cours de la lecture de la description détaillée qui va suivre pour la compréhension de laquelle on se reportera aux dessins annexés dans lesquels :
[Fig.1] - la figure 1 est une vue schématique partielle en perspective de trois-quarts arrière gauche de certains composants et éléments de la partie arrière habitable d'un véhicule de loisirs aménagé selon l'invention, sur laquelle un lit transversal arrière est représenté dans son état déployé de couchage, avec les deux éléments arrière fixe et avant mobile du sommier adjacents et horizontaux ;
[Fig.2] - la figure 2 est une vue schématique de face, partiellement en perspective, illustrant en détail la partie arrière aménagée selon l'invention et sur laquelle les deux éléments du sommier sont la position de couchage qu'ils occupent à la figure 1 ;
[Fig.3] - la figure 3 est une vue analogue à celle de la figure 2 sur laquelle, après pivotement, l'élément avant mobile de sommier est dans une position haute verticale de rangement ;
[Fig.4] - la figure 4 est une vue analogue à celle de la figure 2 sur laquelle, après coulissement longitudinal vers l'arrière, l'élément avant mobile de sommier est dans une position horizontale arrière de rangement qui est décalée longitudinalement vers l'arrière et dans laquelle il est logé en-dessous de l'élément arrière fixe de sommier ;
[Fig.5] - la figure 5 est une vue analogue à celle de la figure 3 qui illustre un premier mode d'accès latéral à la zone fonctionnelle de gauche - conformée ici en une penderie - située en-dessous de l'espace occupé par l'élément avant fixe du sommier lorsque ce dernier est dans sa position horizontale de couchage représentée à la figure 1, avec une porte latérale d'accès illustrée en position ouverte ;
[Fig.6] - la figure 6 est une vue analogue à celle de la figure 3 qui illustre un deuxième mode d'accès par le haut à la zone fonctionnelle de gauche après ouverture de la plaque horizontale supérieure fermant cette zone fonctionnelle et déploiement de la tringle de penderie ;
[Fig.7] - la figure 7 est une vue analogue à celle de la figure 3 qui illustre un mode d'utilisation de la zone fonctionnelle de droite - conformée ici en un bureau - située en-dessous de l'espace occupé par l'élément avant fixe du sommier lorsque ce dernier est dans sa position horizontale de couchage représentée à la figure 1, avec une face latérale ouverte d'accès à la partie inférieure de cette zone fonctionnelle de gauche ;
[Fig.8] - la figure 8 est une vue analogue à celle de la figure 7 sur laquelle on a représenté un tiroir de rangement et une trappe supérieure du bureau en position ouverte ;
[Fig.9] - la figure 9 est une vue de détail en perspective de certains des composants représentés à la figure 1 illustrant notamment plus en détails les deux éléments de sommier ;
[Fig.10] - la figure 10 est une vue agrandie et en perspective éclatée de certains des éléments représentés à la figure 9 illustrant la conception des moyens de guidage en pivotement et en coulissement de l'élément de sommier avant par rapport à l'élément de sommier arrière.
[Fig. 11] - la figure 11 est une partielle en selon un autre angle de perspective de éléments représentés à la figure 10.

### Description détaillée de l'invention

Pour la description de l'invention et la compréhension des revendications, on adoptera à titre non limitatif les orientations verticale, longitudinale et transversale selon le repère V, L, T indiqué aux figures dont les axes longitudinal L et transversal T s'étendent dans un plan horizontal.

Les termes « longitudinal », « transversal », « vertical » et « horizontal » font ici référence aux orientations longitudinale L, transversale T et verticale V d'un véhicule de loisirs, et l'axe transversal est orienté de la droite vers la gauche en considérant la direction de roulage en marche avant du véhicule.

Par convention, l'axe longitudinal L est orienté de l'arrière vers l'avant du véhicule.

Dans la description qui va suivre, des éléments identiques, similaires ou analogues seront désignés par les mêmes chiffres de référence.

Le véhicule de loisirs est par exemple un camping-car. En variante, le véhicule de loisirs peut par exemple être un van ou une caravane.

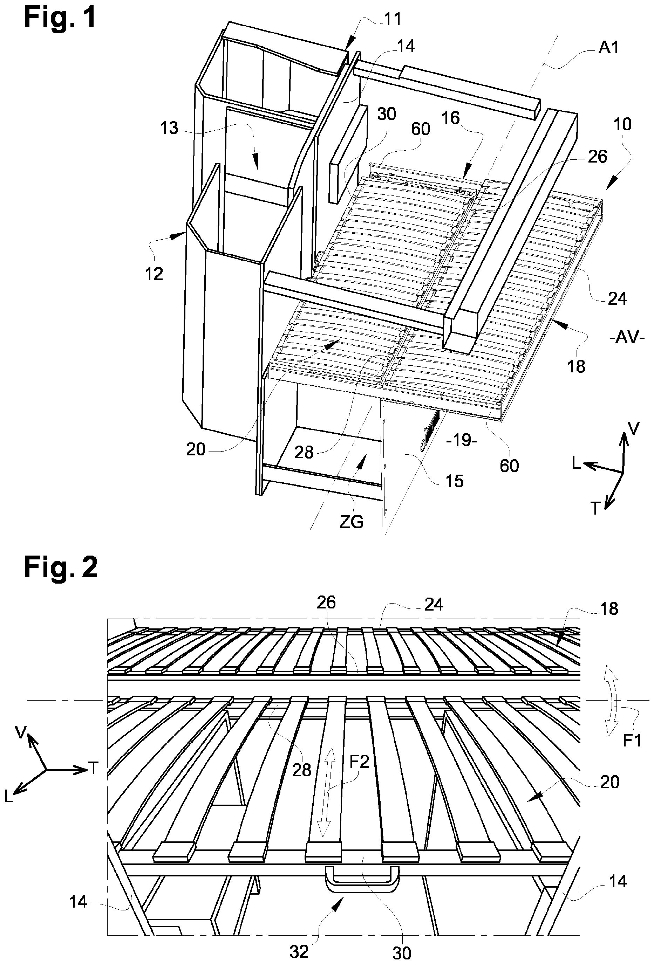

La partie avant du véhicule - non représentée - comporte notamment le poste de conduite avec deux sièges avant gauche et droit, et la partie arrière du véhicule, partiellement représentée aux figures, est son compartiment intérieur habitable dont seule la partie d'extrémité arrière est représentée à la figure 1.

Cette partie ou zone arrière habitable 10 est délimitée notamment des parois verticales transversale arrière, latérale droite et latérale gauche d'orientation longitudinale non représentées. Elle est aussi délimitée par un plancher et par une paroi supérieure horizontale.

La zone arrière intérieure habitable reçoit des composants et divers équipements permettant de vivre à l'intérieur du véhicule, parmi lesquels certains sont représentés à la figure 1.

A titre d'exemple non limitatif, on a représenté des éléments de rangement 11 à droite et un bloc sanitaire 12 à gauche qui délimitent entre eux un passage ou couloir central longitudinal 13.

Longitudinalement vers l'arrière, au-delà d'une cloison transversale intermédiaire 14, le couloir central 13 débouche en regard d'un lit transversal arrière 16.

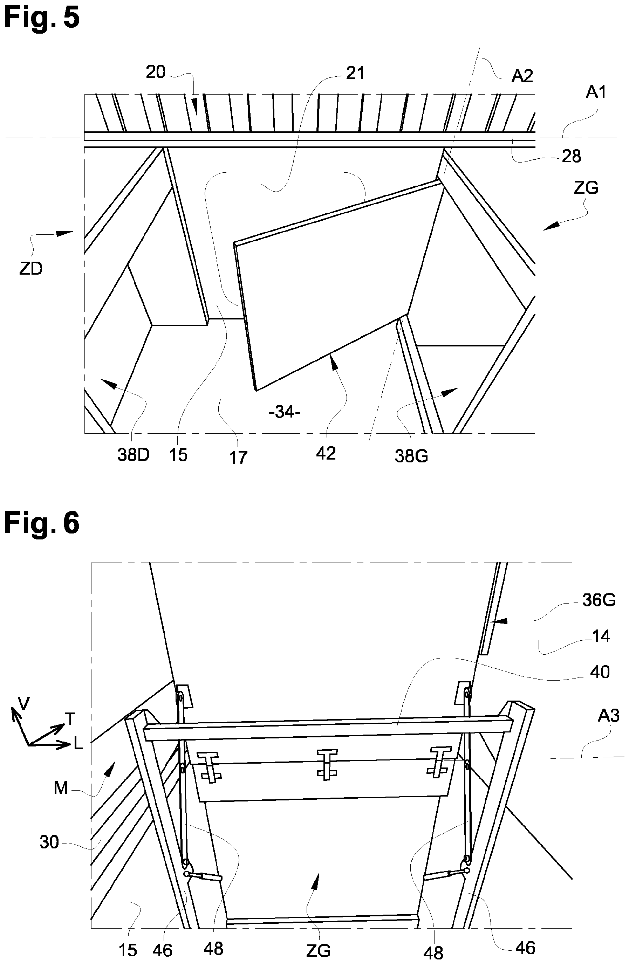

Plus précisément, on distingue une cloison transversale arrière 15 qui s'étend verticalement vers le haut depuis le plancher 17 (Voir figure 5) sur une partie de la hauteur totale disponible et qui est surmontée par le lit transversal arrière 16 qui s'étend ici horizontalement sur toute la largeur transversale de la zone arrière habitable et ici sensiblement à mi-hauteur en délimitant une partie haute de couchage située au-dessus du lit et une partie basse fonctionnelle située en-dessous de la partie avant du lit 16.

Le lit 16 comporte un sommier en deux éléments dont un élément arrière fixe 18 qui s'étend longitudinalement vers l'arrière au-delà de la cloison transversale arrière 15, ici au-dessus d'une soute arrière à bagages ou à vélos 19 à l'intérieur de laquelle il est possible d'accéder depuis l'extérieur du véhicule, et aussi éventuellement grâce à une trappe ou porte basse 21 aménagée à cet effet dans la cloison transversale arrière 15 (Voir figure 5).

Le lit supérieur 16 comporte aussi un élément de sommier avant 20.

Chaque élément de sommier arrière 18 et avant 20 est ici constitué par un cadre rectangulaire qui reçoit des lattes.

Le lit est complété par des éléments de matelas M partiellement visibles sur certaines figures.

Il s'agit de préférence d'un matelas en deux éléments qui peuvent être superposés en position de rangement de l'élément de sommier avant mobile.

L'élément de sommier arrière fixe 18 est délimité longitudinalement par un bord transversal arrière 24 et par un bord transversal avant 26, tandis que l'élément de sommier avant mobile est délimité par un bord transversal arrière 28 et par un bord transversal avant 30.

Les deux éléments de sommier 18 et 20 ont ici des dimensions identiques et notamment ont une largeur identique séparent selon la direction longitudinale leurs bord transversal arrière de leur un bord transversal avant.

Le bord transversal avant 30 de l'élément de sommier avant 20, constitué par un montant de son cadre comporte une poignée centrale 32 permettant sa manipulation.

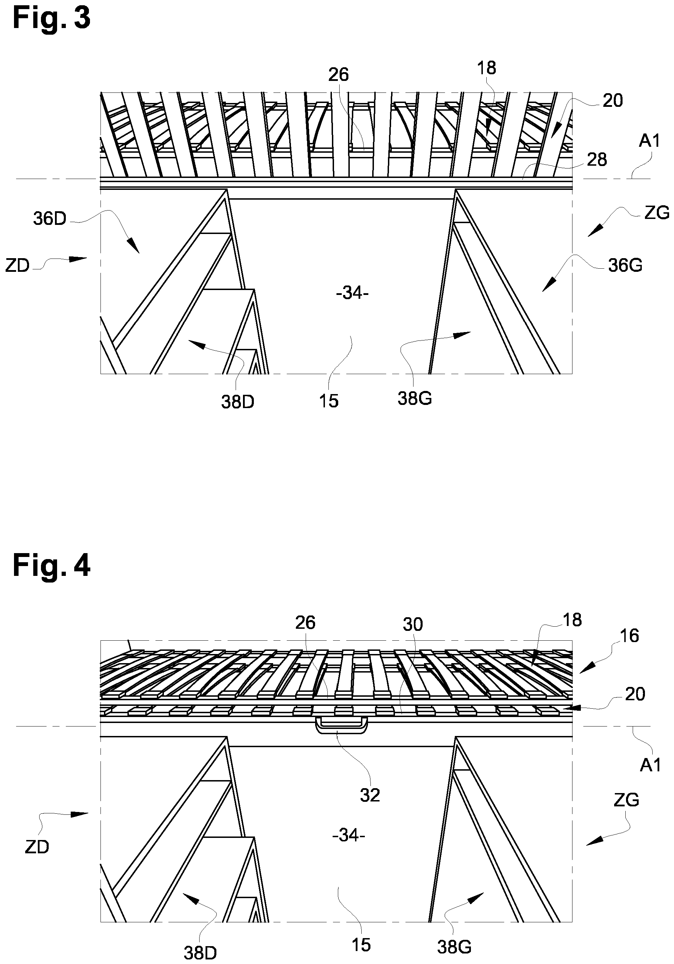

Comme on peut le voir aux figures 2 à 4, la conception et l'agencement des deux éléments de sommier 18 et 20 permet deux modes distincts de manipulation et de déplacement de l'élément de sommier avant 20 pour, en partant de sa position horizontale avant de couchage représentée à la figure 2, l'amener dans l'une ou l'autre de deux positions distinctes de rangement illustrées aux figures 3 et 4.

Le premier mode consiste à faire pivoter l'élément de sommier avant 20 autour d'un axe transversale arrière A1 situé longitudinalement sensiblement au droit de son bord transversal arrière 28.

Ces mouvements de pivotement selon la flèche F1 de la figure 2 permettent de le faire pivoter depuis sa position horizontale avant de couchage et sa position haute de rangement représentée à la figure 3 dans laquelle il s'étend sensiblement verticalement, et inversement pour revenir à la position illustrée à la figure 2.

Des moyens (Non représentés) de verrouillage peuvent être prévus pour retenir l'élément de sommier avant 20 dans sa position haute verticale de rangement.

Le second mode consiste à faire coulisser horizontalement l'élément de sommier avant 20 dans son plan selon la flèche F2 de la figure 2.

Un mouvement de coulissement longitudinal vers l'arrière en partant de la position de la figure 2 permet de le déplacer depuis sa position horizontale avant de couchage jusqu'à sa position horizontale arrière de rangement représentée à la figure 4 dans laquelle il s'étend horizontalement en-dessous de l'élément de sommier arrière fixe 18, et inversement pour revenir à la position illustrée à la figure 2.

Il est ainsi possible de déplacer dans les deux sens et de ranger ou de déployer l'élément de sommier avant 20 à la manière d'un tiroir.

La position horizontale arrière de rangement est décalée longitudinalement par rapport à la position horizontale avant de couchage de manière que, comme on peut le voir à la figure 4, il soit entièrement escamoté sous l'élément de sommier arrière 18 avec son bord transversal avant 30 situé sensiblement au doit du bord transversal avant 26 de l'élément de sommier arrière 18 ou décalé vers l'arrière par rapport à celui- ci.

Ainsi, comme on peut le voir à la figure 4, sur toute la largeur transversale, la zone située préalablement au-dessous de l'élément de sommier avant 20 en position horizontale de couchage est entièrement dégagée vers le haut.

Par comparaison, en considérant la figure 3, lorsque l'élément de sommier avant 20 est dans sa position haute verticale de rangement, il empiète longitudinalement vers l'avant en étant situé vers l'avant au-delà du montant transversal avant 26 de l'élément de sommier arrière fixe 18.

Ainsi, l'élément de sommier avant 20 est monté pivotant entre sa position basse horizontale de couchage dans laquelle il s'étend horizontalement dans le prolongement de l'élément de sommier arrière fixe 18 pour constituer un plan de couchage, et une position haute verticale de rangement.

Le lit supérieur 16 délimite verticalement un espace de couchage, qui est délimité longitudinalement vers l'avant par le bord transversal avant 30 de l'élément de sommier avant 20 qui constitue ici un bord de seuil permettant d'accéder à la partie haute de la zone intérieure habitable.

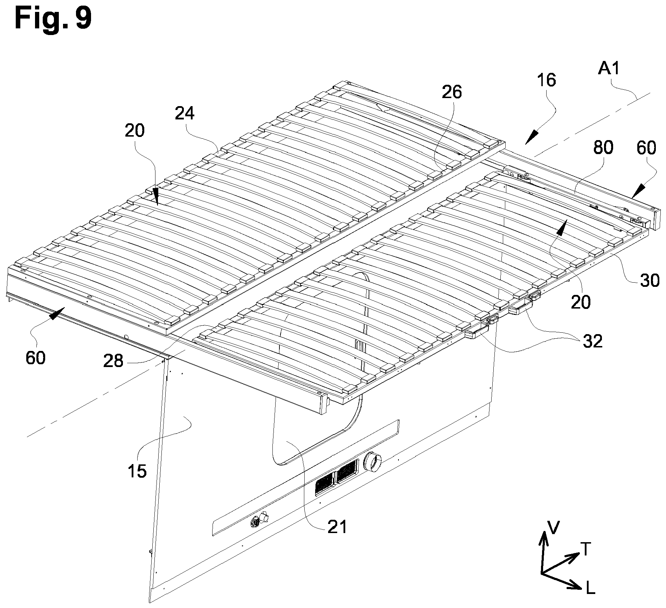

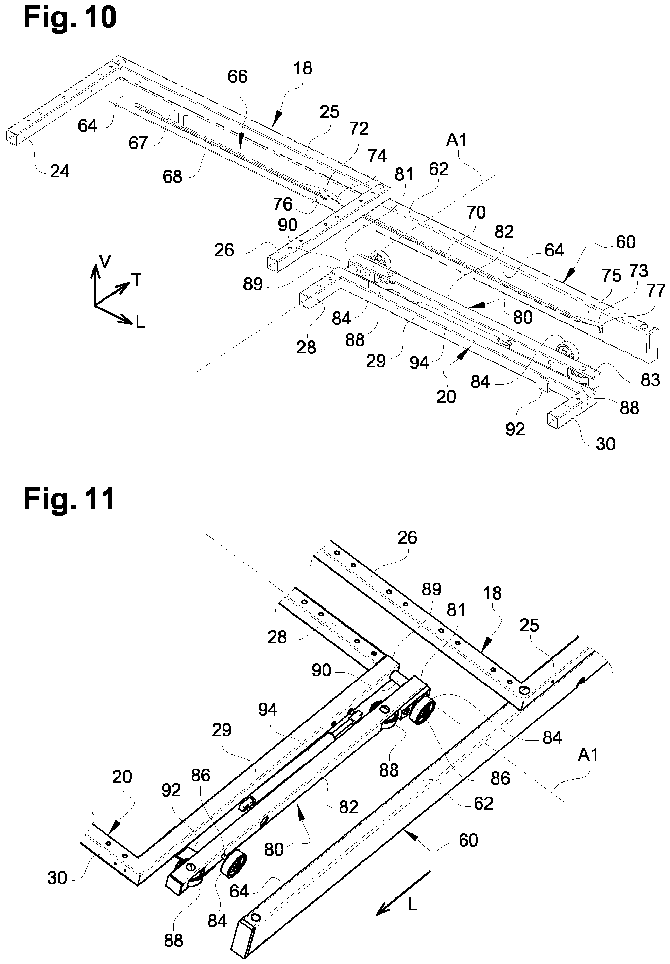

Comme on peut le voir plus en détails à la figure 9, chaque élément de sommier 18, 20 est ici réalisé sous la forme d'un cadre tubulaire comportant deux montants transversaux parallèles 28-30, 24-26 qui sont reliés entre eux par paire par des montants longitudinaux d'extrémité 29, 25 (Voir figures 10 et 11).

La conception des moyens de fixation du lit 16 et de guidage en déplacement de l'élément de sommier avant mobile 20 est identique à chacune des deux extrémités transversales du lit 16.

Pour le montage et la fixation de l'ensemble du lit 16, ce dernier comporte deux rails longitudinaux opposés 60 dont chacun par exemple prévu pour être fixé chacun sur une zone latérale droite ZD et latérale gauche ZG.

Les montants longitudinaux 25 de l'élément de sommier arrière fixe 18 sont ici fixés, chacun sur la face supérieure 62 d'un rail 60 associé.

Sur sa face latérale interne 64, d'orientation longitudinale et verticale, chaque rail 60 comporte une rainure longitudinale et continue de guidage 66.

Chaque rainure de guidage 66 comporte un tronçon arrière 68 rectiligne et horizontal et un tronçon avant 70 rectiligne et horizontal.

Ces deux tronçons rectilignes 68 et 70 sont reliées entre eux par un tronçon central 72 formant une rampe 74 et un cran 76.

A son extrémité avant, le tronçon avant rectiligne 70 comporte un tronçon d'extrémité avant 73 de conception analogue formant rampe 75 et cran 77.

Chaque rail 60 avec sa rainure de guidage 66 reçoit en coulissement longitudinal dans les deux sens un chariot 80 qui est conçu pour porter une extrémité transversale de l'élément de sommier mobile 20.

Chaque chariot 80 se présente sous la forme d'un barreau qui, sur sa face latérale externe 82 porte une paire de galets tournants verticaux 84 dont chacun est porté par un axe transversal 86

Les galets 84 sont reçus à l'intérieur d'un rail 60 et chaque axe 86 est reçu dans la rainure de guidage 66.

La face latérale externe 82 porte aussi deux galets tournants horizontaux 88 qui coopèrent avec la face latérale interne 64 du rail associé 60.

A son extrémité longitudinale arrière 89, chaque montant longitudinal arrière 28 de l'élément de sommier mobile 20 porte un axe transversal 90 grâce auquel, l'extrémité longitudinale arrière 81 du barreau 80 est montée pivotante dans les deux sens autour de l'axe transversal A1.

Au voisinage de son extrémité longitudinale avant 83, chaque chariot 80 comporte une patte 92 sur laquelle, dans la position horizontale d'utilisation de l'élément de sommier mobile 20, un montant longitudinal 29 d'extrémité prend appui verticalement.

Ainsi, lorsque cet appui vers le bas est réalisé, chaque montant longitudinal est parallèle au chariot associé 80 qui est lui-même monté coulissant horizontalement sur le rail associé 60. Pour assister les mouvements de pivotement dans les deux sens de l'élément de sommier mobile 20 autour de l'axe A1, à chaque extrémité transversale, il est prévu un amortisseur 94 qui intervient entre le chariot 80 et le montant transversal associé 29.

En position longitudinale horizontale avant de l'élément de sommier mobile 20, chaque axe 86 est logé dans un cran associé 77.

Pour faire coulisser l'élément de sommier mobile 20 longitudinalement vers l'arrière sous l'élément de sommier arrière fixe 18, il faut appliquer un effort longitudinal vers l'arrière en agissant sur le montant transversal avant au moyen de la ou des poignées 32 pour franchir simultanément les deux crans 77 et 76 puis faire coulisser l'ensemble dans la rainure jusqu'à ce que l'axe 86 avant soit reçu dans le cran avant 76 qui constitue alors un cran de blocage de l'élément de sommier mobile 20 dans sa position horizontale de rangement.

Enfin, au voisinage de son extrémité arrière, chaque rainure de guidage 66 comporte une ouverture débouchante 67 permettant l'assemblage initial par introduction des galets 84 avec leurs axes 86 à l'intérieur du rail de guidage 60.

Comme on peut le voir notamment aux figures 3 et 4, la zone qui est située en-dessous de l'élément de sommier avant 20 en position de couchage est ici aménagée avec deux zones fonctionnelles latérales ZG et ZD qui sont agencées en vis-à-vis et séparées l'une de l'autre par un espace central libre 34 situé dans le prolongement du couloir central 13.

La portion de la cloison transversale arrière 15, située entre ces deux zones peut, comme on le voit à la figue 5, comporter une porte ou trappe 21 d'accès à la soute arrière 19.

En position de rangement, haute verticale ou horizontale en-dessous de l'élément de sommier arrière 18, de l'élément de sommier avant 20 il est possible de se tenir dans l'espace central 34 et d'accéder aux deux zones fonctionnelles ZG et ZD.

Chaque zone latérale fonctionnelle ZG, ZD est délimitée verticalement vers le haut par une plaque supérieure 36G, 36D et elle délimitée latéralement par une face latérale 38G, 38D, d'orientation verticale et longitudinale, permettant - en fonction des fonctionnalités associées - d'accéder à l'intérieur de ladite zone latérale fonctionnelle associée.

Comme on peut le voir à la figure 4, dans la position horizontale de rangement de l'élément avant de sommier 20, la totalité de chaque plaque supérieure 36G, 36D est dégagée permettant d'en utiliser toute la surface utile et/ou de la faire pivoter comme cela sera expliqué par la suite.

Comme on peut le voir à la figure 3, dans la position verticale haute de l'élément avant de sommier 20, ce dernier empiète légèrement sur ces surfaces, à proximité de la cloison transversale arrière 15. Néanmoins, dans cette position, il est possible d'accéder à la porte latérale 42 sans avoir à défaire le lit.

Selon l'exemple d'aménagement illustré en détail aux figures 5 et 6, la zone fonctionnelle gauche ZG est une penderie comportant une tringle 40 pour l'accrochage de vêtements.

Il est ici possible d'accéder à l'intérieur de la penderie, soit latéralement, soit par le haut. Comme on peut le voir à la figure 5, pour y accéder latéralement, il est prévu une porte latérale 42 d'accès qui est montée pivotante autour d'un axe vertical A2.

En position fermée, la porte latérale 42 assure la fermeture de la face latérale 38G d'accès à l'intérieur de la zone latérale fonctionnelle gauche ZG.

Si l'espace disponible n'est pas utilisé en penderie, la porte latérale 42 permet d'y accéder comme volume de rangement.

Comme on peut le voir à la figure 6, pour accéder au volume intérieur et à la tringle de penderie 40, il est aussi possible de faire pivoter la plaque supérieure 36G qui est montée pivotante autour d'un axe horizontal et transversal A3 entre sa position horizontale de repos et une position relevée sensiblement verticale.

La tringle de penderie 40 est une barre horizontale parallèle à cet axe A3 de pivotement. On peut ainsi accéder à la tringle 40 et à la penderie par le haut.

Selon un agencement particulièrement avantageux illustré à la figure 6, la tringle de penderie 40 est monté mobile - globalement verticalement - entre une position haute déployée et sa position basse de rangement Illustrée à la figure 5.

A cet effet, la tringle de penderie est reliée mécaniquement par des moyens 46 de guidage vertical et des moyens 48 d'entraînement liés à la plaque supérieure pivotante 36G.

Ainsi, la tringle de penderie 40 est dans sa position basse de rangement lorsque la plaque horizontale 36G est dans sa position horizontale (Figure 5), et elle est dans sa position haute déployée lorsque la plaque horizontale 36G est dans sa position est dans sa position relevée (Figure 6).

Selon l'exemple d'aménagement illustré en détail aux figures 5, 7 et 8, la zone fonctionnelle droite ZD est un bureau comportant un plan de travail constitué par la face supérieure 50 de la plaque supérieure 36D.

Comme on peut le voir à la figure 5, en partie basse, la face latérale 38D est au moins partiellement ouverte pour permettre à un utilisateur assis devant le plan de travail de disposer ses jambes au moins en partie à l'intérieur de la zone latérale fonctionnelle droite ZD, à travers cette face latérale 38D

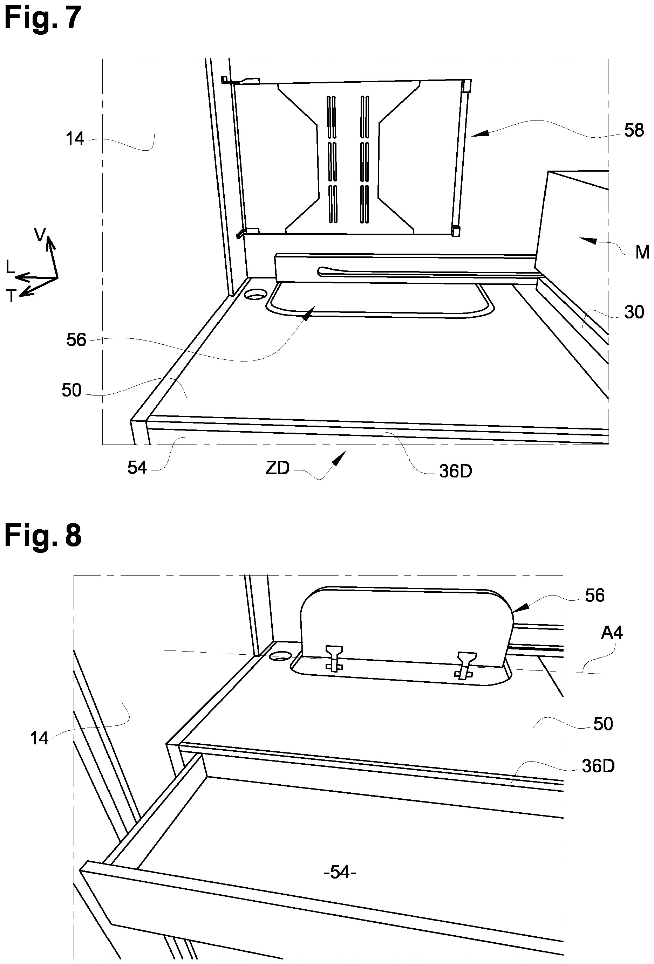

Comme on peut le voir aux figures 7 et 8, Le bureau peut comporter un tiroir de rangement 54 qui coulisse transversalement, et une trappe 56, permettant d'accéder à des moyens de connexion électrique, qui est montée pivotante autour d'un axe longitudinal A4. L'équipement pour l'usage du bureau peut aussi être complété par un écran 58 porté par un support mural.

## Revendications

1. Véhicule de loisirs, **caractérisé en ce qu'**il comporte une zone intérieure habitable qui comporte :
- une partie basse délimitée par un plancher (17) ;
- et une partie haute constituant un espace de couchage qui comporte :
- un premier élément plan de couchage, notamment un premier élément de sommier (20), qui est délimité par un bord transversal avant (30) et un bord transversal arrière (28) et qui :
-- est monté pivotant autour d'un axe transversal horizontal arrière (A1), situé au droit de son bord transversal arrière (28), entre une position horizontale avant de couchage et une position haute verticale de rangement ;
-- et est monté coulissant horizontalement entre sa position horizontale avant de couchage et une position horizontale arrière de rangement qui est décalée longitudinalement vers l'arrière par rapport à cette position horizontale avant de couchage.

2. Véhicule de loisirs selon la revendication 1, **caractérisé en ce que** la partie haute constituant un espace de couchage comporte un second élément plan de couchage (18), notamment un second élément fixe de couchage qui :
- lorsque le premier élément de couchage (20) est dans sa position horizontale avant de couchage, prolonge ce dernier vers l'arrière pour constituer un plan de couchage à deux éléments plans de couchage adjacents (18, 20) ;
- et, lorsque le premier élément de couchage (20) est dans sa position horizontale arrière de rangement, est situé au-dessus de ce dernier.

3. Véhicule de loisirs selon la revendication 2, **caractérisé en ce que** la position horizontale arrière de rangement du premier élément de couchage (20) est décalée longitudinalement par rapport à la position horizontale avant de couchage de manière qu'il soit entièrement escamoté sous le second élément plan de couchage (18) avec son bord transversal avant (30) situé sensiblement au doit du bord transversal avant (26) du second élément plan de couchage (18) ou décalé vers l'arrière par rapport à celui- ci.

4. Véhicule de loisirs selon l'une quelconque des revendications 1 à 3, **caractérisé en ce que**, dans sa position horizontale avant de couchage, le premier élément plan de couchage (20), s'étend au-dessus d'au moins une première zone latérale fonctionnelle (ZG) fermée par une première plaque horizontale (36G) et délimitée latéralement par une première face latérale (38G), d'orientation verticale et longitudinale, d'accès à l'intérieur de la première zone latérale fonctionnelle (ZG) et **en ce que**, dans la position haute verticale de rangement du premier élément plan de couchage (20), un utilisateur peut accéder à la première zone latérale fonctionnelle (ZG) par la première face latérale d'accès (38G).

5. Véhicule selon la revendication 4, **caractérisé en ce que** la première plaque horizontale (36G) est montée pivotante autour d'un axe horizontal (A3) entre sa position horizontale de repos et une position relevée et **en ce que**, lorsque le premier élément plan de couchage (20) est dans sa position horizontale arrière de rangement, un utilisateur peut relever la première plaque horizontale (36G) pour lui permettre d'accéder par le haut à la première zone latérale fonctionnelle (ZG).

6. Véhicule selon l'une des revendications 4 ou 5, **caractérisé en ce que** la première zone fonctionnelle (ZG) est une penderie comportant une tringle de penderie (40).

7. Véhicule selon la revendication 6, **caractérisé en ce que** la tringle de penderie (40) est monté mobile entre une position basse de rangement et une position haute déployée, et **en ce que** la tringle de penderie (40) est liée en mouvement (46, 48) avec la première plaque horizontale pivotante (36G), grâce à quoi la tringle de penderie (40) est dans sa position basse de rangement lorsque la première plaque horizontale pivotante (36G) est dans sa position horizontale, et est dans sa position haute déployée lorsque la première plaque horizontale pivotante (36G) est dans sa position relevée.

8. Véhicule selon la revendication précédente, **caractérisé en ce que** l'axe de (A3) pivotement de la première plaque horizontale (36G) est d'orientation longitudinale, et **en ce que** la tringle de penderie (40) est une barre horizontale parallèle à cet axe (A3) de pivotement.

9. Véhicule selon la revendication 4, **caractérisé en ce qu'**il comporte une porte (42) de fermeture de la première face latérale (38G) d'accès à l'intérieur de la première zone latérale fonctionnelle (ZG).

10. Véhicule de loisirs selon l'une quelconque des revendications précédentes, **caractérisé en ce que**, dans sa position horizontale avant de couchage, le premier élément plan de couchage (20) s'étend au-dessus d'au moins une deuxième zone latérale fonctionnelle(ZD) fermée par une deuxième plaque horizontale (36D) et délimitée latéralement par une deuxième face (38D), d'orientation verticale et longitudinale, d'accès à l'intérieur de la deuxième zone latérale fonctionnelle (ZD), et **en ce que**, dans la position haute verticale de rangement du premier élément plan de couchage (20) ou dans sa position horizontale arrière de rangement, un utilisateur peut accéder à la deuxième zone latérale fonctionnelle (ZD) par la deuxième face latérale d'accès (38D) et à la face supérieure de la deuxième plaque horizontale (36D).

11. Véhicule selon la revendication 10, **caractérisé en ce que** la première plaque horizontale est un plan de travail, notamment d'un bureau, et **en ce que** la deuxième zone latérale fonctionnelle permet à un utilisateur assis devant le plan de travail de disposer ses jambes au moins en partie à l'intérieur de la deuxième zone latérale fonctionnelle, à travers la deuxième face latérale d'accès (38D).

12. Véhicule selon la revendication 10 prise en combinaison avec la revendication 4, **caractérisé en ce que** la première (38G) et la deuxième (38D) faces latérales d'accès sont agencées l'une face à l'autre et délimitent entre elles un espace (34) d'accès à la première et à la deuxième zones fonctionnelles qui est délimité verticalement vers le bas par une portion du plancher (17) et qui, lorsque le premier élément plan de couchage (20) est dans sa position horizontale, est délimité vers le haut par une portion du premier élément plan de couchage (20).
